(19) Europäisches Patentamt
European Patent Office
Office européen des brevets

(11) **EP 1 862 300 A1**

(12) **EUROPÄISCHE PATENTANMELDUNG**

(43) Veröffentlichungstag:
**05.12.2007 Patentblatt 2007/49**

(51) Int Cl.:
***B32B 27/36*** (2006.01)

(21) Anmeldenummer: **07010207.4**

(22) Anmeldetag: **23.05.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **31.05.2006 DE 102006025281**

(71) Anmelder: **Mitsubishi Polyester Film GmbH**
**65203 Wiesbaden (DE)**

(72) Erfinder:
- **Konrad, Matthias, Dr.**
  **65719 Hofheim (DE)**
- **Pfeiffer, Herbert, Dr., Professor**
  **55126 Mainz (DE)**
- **Hilkert, Gottfried, Dr.**
  **55291 Saulheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(54) **Siegelfähige, biaxial orientierte Polyesterfolie mit hydrophiler Beschichtung**

(57) Die vorliegende Erfindung betrifft eine Polyesterfolie, welche eine Basisschicht (B), eine Deckschicht (C) und eine siegelfähige Deckschicht (A) mit Antifog-Beschichtung aufweist, wobei
a) die siegelfähige Deckschicht (A) weniger als 0,01 Gew.-% externe Partikel enthält und
b) die Deckschicht (C) 0,12 bis 0,4 Gew.-% externe Partikel enthält, die einen mittleren Durchmesser $d_{50}$ von 2 bis 5 $\mu$m und eine Partikelgrößenverteilung (SPAN98) von 1,2 bis 2 aufweisen.

Der bevorzugte Polyester der Basisschicht (B) ist PET, der der Deckschicht (A) ein Copolyester mit Ethylenterephthalat- und Ethylenisophthalat-Einheiten.

**EP 1 862 300 A1**

**Beschreibung**

Die Erfindung betrifft eine transparente, siegelfähige, biaxial orientierte Polyesterfolie umfassend eine Basisschicht (B), eine siegelfähige Deckschicht (A), eine Antifog-Beschichtung auf dieser Siegelschicht (A) und eine nicht siegelfähige Deckschicht (C). Die Erfindung betrifft weiterhin ein Verfahren zur Herstellung der Folie und ihre Verwendung.

Siegelfähige, biaxial orientierte Polyesterfolien nach dem Stand der Technik sind bekannt.

Die Verpackungsindustrie hat einen hohen Bedarf an transparenten, biaxial orientierten Polyesterfolien. Werden frische, leichtverderbliche Lebensmittel mit Polyesterfolie verpackt, kann es, besonders bei gekühlten Waren, zum unerwünschten Beschlagen der Folie und somit zur Ver-schlechterung der Transparenz kommen, wenn Feuchtigkeit aus dem verpackten Gut an der Folie in Form von meist unterschiedlich großen Tropfen kondensiert. Dabei wird die Transparenz der Folie durch das Kondensat deutlich verschlechtert. Die Verminderung der Transparenz der Folie kann durch eine hydrophile Beschichtung, auch Antibeschlag-Beschichtung oder Anti-Fog-Beschichtung genannt, verhindert werden.

In der GB-A-1465 973 wird eine coextrudierte, zweischichtige Polyesterfolie beschrieben, deren eine Schicht aus isophthalsäure- und terephthalsäurehaltigen Copolyestern und deren andere Schicht aus Polyethylenterephthalat besteht. Über das Siegelverhalten der Folie finden sich in der Schrift keine verwertbaren Angaben. Wegen fehlender Pigmentierung ist die Folie nur bedingt wickelbar und weiterverarbeitbar.

In der EP-A-0 035 835 wird eine coextrudierte, siegelfähige Polyesterfolie beschrieben, der zur Verbesserung des Wickel- und des Verarbeitungsverhaltens in der Siegelschicht Partikel zugesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Über die andere, nicht siegelfähige Schicht der Folie werden keine näheren Angaben zur Einarbeitung von Antiblockmitteln gemacht. Es bleibt offen, ob diese Schicht Antiblockmittel enthält. Durch Wahl von Partikeln mit größerem Durchmesser als die Dicke der Siegelschicht und den in den Beispielen angegebenen Konzentrationen wird das Siegelverhalten der Folie verschlechtert. Die Siegelnaht wird bei 140 °C hergestellt und die Siegelnahtfestigkeit bei 23 °C bestimmt, und sie liegt in einem Bereich von 63 bis 120 N/m (entsprechend 0,97 bis 1,8 N/15 mm Folienbreite).

In der EP-A-0 515 096 wird eine coextrudierte, mehrschichtige, siegelfähige Polyesterfolie beschrieben, die auf der siegelfähigen Schicht ein zusätzliches Additiv aufweist. Das Additiv kann z. B. anorganische Partikel enthalten und wird vorzugsweise als wässrige Schicht auf die Folie bei deren Herstellung aufgetragen. Hierdurch sollen die guten Siegeleigenschaften beibehalten werden und die Folie gut zu verarbeiten sein. Die Rückseite der Folie enthält nur sehr wenige Partikel, die hauptsächlich über das Regranulat in diese Schicht gelangen. Angaben zum Siegeltemperaturbereich der Folie werden in dieser Schrift nicht gemacht. Die Siegelnaht wird bei 140 °C hergestellt und die Siegelnahtfestigkeit bei 23 °C bestimmt, und sie beträgt mehr als 200 N/m (entsprechend 3 N/15 mm Folienbreite). Für eine 3 μm dicke Siegelschicht wird eine Siegelnahtfestigkeit von 275 N/m (entsprechend 4,125 N/15 mm Folienbreite) angegeben.

In der EP 0 920 381 B1 wird eine coextrudierte, mehrschichtige Polyesterfolie beschrieben, die eine siegelfähige Deckschicht und eine nicht siegelfähige Basisschicht aufweist. Die Basisschicht kann dabei aus einer oder aus mehreren Schichten aufgebaut sein, wobei eine der Schichten mit der siegelfähigen Schicht in Kontakt ist. Die andere (äußere) Schicht bildet dann die zweite, nicht siegelfähige Deckschicht. Die siegelfähige Deckschicht kann aus isophthalsäure- und terephthalsäurehaltigen Copolyestern bestehen. Die Folie enthält außerdem einen UV-Absorber, der der Basisschicht in einer Menge von 0,1 bis 10 Gew.-% zugegeben wird. Die Basisschicht dieser Folie ist mit üblichen Antiblockmitteln ausgestattet. Die Folie zeichnet sich durch eine gute Siegelfähigkeit aus, hat jedoch nicht das gewünschte Verarbeitungsverhalten und weist Defizite in den optischen Eigenschaften auf. So wird beispielsweise die Trübung der Folie mit < 75 % angegeben.

In der EP-A-1 138 480 wird eine biaxial orientierte, siegelfähige Polyesterfolie mit einer Basisschicht (B), einer siegelfähigen Deckschicht (A) und einer weiteren, nicht siegelfähigen Deckschicht (C) beschrieben. Die siegelfähige Deckschicht (A) hat eine Siegelanspringtemperatur (auch Mindestsiegeltemperatur genannt) von maximal 110 °C und eine Siegelnahtfestigkeit von mindestens 1,3 N/15 mm Folienbreite. Die Topographien der beiden Deckschichten (A) und (C) sind durch bestimmte Merkmale gekennzeichnet. Diese Folie eignet sich besonders für den Einsatz in der flexiblen Verpackung, und zwar insbesondere für den Einsatz auf schnelllaufenden Verpackungsmaschinen. Die Folie zeigt bzgl. Handling und Verarbeitungsverhalten noch Defizite.

EP-A-1471096, EP-A-1471097, EP-A-1475 228, EP-A-1475 229, EP-A-1471094 und EP-A-1471098 beschreiben heißsiegelbare und gegenüber APET/CPET peelfähige Polyesterfolien mit ABC-Aufbau, die zur Einstellung der gewünschten Peeleigenschaften in der peelfähigen und heißsiegelbaren Deckschicht (A) entweder ca. 2 -10 Gew.-% anorganische oder organische Partikel oder aber ein polyesterunverträgliches Polymer wie z. B. ein Norbornen/Ethylen-Copolymer enthalten.

Aus der US-A-4,467,073 ist eine transparente Antibeschlag-Beschichtung bekannt. Die Zusammensetzung enthält a) Polyvinylpyrrolidon, Polydimethylacrylamid oder ein Polyvinylpyrrolidon-Copolymer mit einem α-Olefin, b) ein Polyisocyanat-Präpolymer, c) ein Tensid und d) ein organisches Lösemittel. Nachteil dieser Erfindung ist das Verwenden eines organischen Lösemittels, speziell wenn der Beschichtungsschritt in die Folienherstellung einbezogen werden soll (in-line). Zudem ist der Einsatz eines Isocyanates für die Verwendung in der Lebensmittelverpackung bedenklich, da kanzerogene primäre Amine entstehen können.

Die US-A-5,262,475 beschreibt eine hydrophile Zusammensetzung, die Polyvinylpyrrolidon, Polyvinylalkohol und als Vernetzer Melamin, eine Mineralsäure oder eine starke organische Säure enthält. Weiterhin kann die Beschichtungslösung Additive wie Kettenverlängerer, Schaumregulierer oder Tenside enthalten. Der Feststoffgehalt der Beschichtung beträgt 5 bis 50 %. Die Vernetzung zu harten klaren Schichten erfordert Temperaturen von mind. 75 °C, in den Beispielen werden Temperaturen zwischen 130 und 150 °C verwendet. Damit sind diese Beschichtungen für die In-line-Aufbringung auf Polyesterfolien ungeeignet, da die Komponenten bereits beim Trocknen bzw. beim Strecken vernetzen und die Beschichtung somit einreißt und damit zu Abrissen der Folie führen kann. Auch die Tatsache, dass die vernetzten Beschichtungen als hart beschrieben werden, lässt ihre Anwendung auf flexiblen Substraten ungeeignet erscheinen.

Bisher sind keine Polyesterfolien bekannt, die eine gute Siegelfähigkeit und gute Antifog-Eigenschaften aufweisen.

Aufgabe der vorliegenden Erfindung war es nun, eine siegelfähige, biaxial orientierte, nicht beschlagende Polyesterfolie bereitzustellen, die die Nachteile der Folien nach dem Stand der Technik nicht aufweist und sich insbesondere durch

- eine verbesserte Siegelfähigkeit gegenüber sich selbst und gegenüber Substraten aus insbesondere APET, A/CPET, CPET,
- eine verbesserte Wickelung,
- verbessertes Verarbeitungsverhalten (niedrige Reibung),
- verbesserte optische Eigenschaften (Trübung)
- und durch eine gute Anti-Fog-Wirkung

auszeichnet.

(APET = amorphes Polyethylenterephthalat (PET); CPET = kristallines PET; A/CPET= zweischichtiges Laminat z. B. bei einer Menüschale, innen APET, außen CPET)

Ein besonderes Anliegen der vorliegenden Erfindung war es, eine Polyesterfolie mit gutem Anti-fog-Effekt und gleichzeitig guter Siegelung gegen andere (nicht siegelfähige) Polyesterfolien oder Trays (Menüschalen) aus Polyester bereitzustellen.

Die Siegelnahtfestigkeit der Deckschicht (A) der Polyesterfolie gegenüber sich selbst (Siegeltemperatur 180 °C) ist bevorzugt größer als 1,0 N/15 mm, insbesondere größer als 1,2 N/15 mm und besonders bevorzugt größer als 1,4 N/15 mm. Gegen ein APET-Substrat soll die Mindestsiegeltemperatur der Deckschicht (A) der Polyesterfolie bevorzugt kleiner als 160 °C, insbesondere kleiner als 155 °C und besonders bevorzugt kleiner als 150 °C sein und die Siegelnahtfestigkeit der Deckschicht (A) der Polyesterfolie gegenüber einem A/PET-Substrat (Siegeltemperatur 180 °C) bevorzugt größer als 1,0 N/15 mm, insbesondere größer als 1,2 N/15 mm und besonders bevorzugt größer als 1,4 N/15 mm sein.

Außerdem sollte dafür Sorge getragen werden, dass die Folie gut wickelbar ist und auf schnelllaufenden Maschinen verarbeitet werden kann. Bei der Herstellung der Folie sollte zudem gewährleistet sein, dass anfallendes Verschnittmaterial als Regenerat in einer Menge von bevorzugt bis zu 60 Gew.-%, bezogen auf das Gesamtgewicht der Folie, wieder dem Herstellprozess zurückgeführt werden kann, ohne dass dabei die physikalischen und optischen Eigenschaften der Folie negativ beeinflusst werden.

Die Aufgabe wird erfindungsgemäß durch die Bereitstellung einer transparenten, biaxial orientierten, siegelfähigen, nicht beschlagenden Polyesterfolie mit einer Basisschicht (B), einer siegelfähigen Deckschicht (A) mit Antifog-Beschichtung und einer Deckschicht (C) gelöst, wobei

a) die siegelfähige Deckschicht (A) weniger als 0,01 Gew.-% externe Partikel enthält (bezogen auf das Gesamtgewicht der Deckschicht (A)),

b) die Beschichtung vor dem Auftrag auf die Folie Wasser und die folgenden Komponenten enthält:

Polyvinylpyrrolidon (= Komponente i),
ein Tensid (= Komponente ii) und optional
ein Polymer, das die Anbindung der anderen Komponenten an die Polyesteroberfläche verbessert (haftvermittelndes Polymer = Komponente iii), und

c) die nicht siegelfähige Deckschicht (C) ein Pigment enthält, das durch die folgenden Merkmale gekennzeichnet ist:

der mittlere Durchmesser der Partikel ($d_{50}$-Wert) liegt im Bereich von bevorzugt 2 bis 5 $\mu$m, die Streuung der Partikelgrößenverteilung, ausgedrückt durch den SPAN98, liegt im Bereich von bevorzugt 1,2 bis 2, und die Konzentration der Partikel liegt im Bereich von bevorzugt 0,12 bis 0,40 Gew.-%, bezogen auf das Gesamtgewicht der Deckschicht (C).

Unter Pigmenten (hier auch als Partikel bezeichnet) sind auch Antiblockmittel, Füller, externe oder inerte Partikel, welche durch die genannten Parameter charakterisiert sind, zu verstehen. Typische Pigmente sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid, Kaolin oder partikelförmige Polymere wie z. B. vernetzte Polystyrol- oder Arcrylat-Partikel.

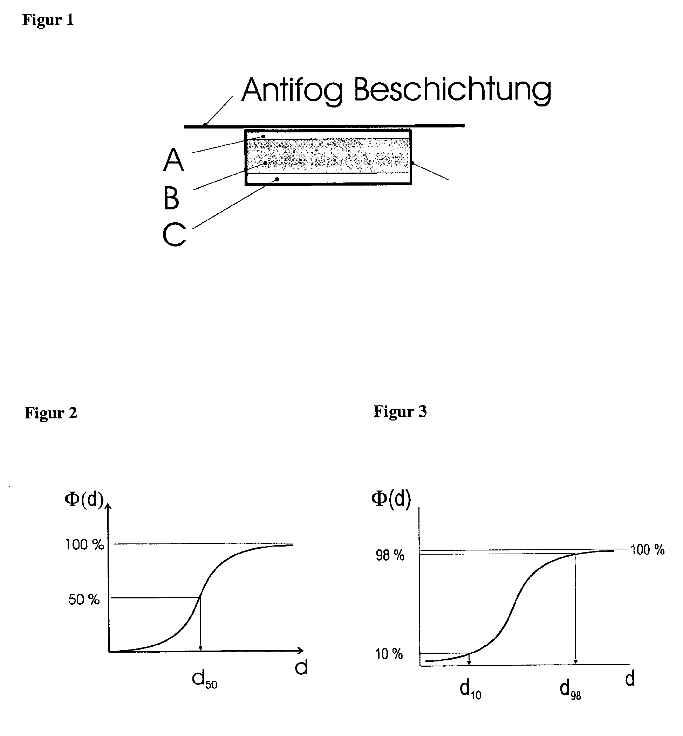

Erfindungsgemäß ist die Folie bevorzugt dreischichtig aufgebaut und umfasst die Basisschicht (B), die siegelfähige und beschichtete Deckschicht (A) und die nicht siegelfähige Deckschicht (C) (A-B-C, Figur 1).

Bevorzugt ist die Trübung der transparenten Folie kleiner als 5 %.

Die siegelfähige Deckschicht (A) enthält bevorzugt weniger als 0,01 Gew.-% (bezogen auf das Gesamtgewicht der Deckschicht (A)), besonders bevorzugt gar keine externen Partikel. In diesem Fall ist die Siegelung gegenüber sich selbst und gegenüber den oben gelisteten Materialien am besten. Zwischen der Siegelschicht (A) und dem Substrat bilden sich in diesem Fall keine Bläschen, und die Siegelung ist vollflächig. Im anderen Fall bilden sich z. B. durch die Spitzen der Füllstoffe Hohlräume, die die Siegelung verschlechtern.

Es wurde gefunden, dass der Partikeldurchmesser $d_{50}$, die Streuung SPAN98 und die Konzentration der verwendeten Pigmente in der nichtsiegelfähigen Deckschicht (C) entscheidend für eine gute Wickelung, für eine gute Verarbeitbarkeit und für eine gute Optik der Folie sind.

Zur Erzielung einer guten Wickelung und einer guten Verarbeitbarkeit der Folie enthält die Deckschicht (C) ein Pigment, bei dem der mittlere Durchmesser ($d_{50}$-Wert) im Bereich von 2 bis 5 $\mu$m, bevorzugt von 2,1 bis 4,9 $\mu$m und besonders bevorzugt von 2,2 bis 4,8 $\mu$m und der SPAN98 im Bereich von 1,2 bis 2, bevorzugt von 1,25 bis 1,9 und besonders bevorzugt von 1,3 bis 1,8 liegt.

Enthält die Deckschicht (C) dagegen ein Pigment, bei dem der mittlere Durchmesser und/oder der SPAN98 außerhalb des erfindungsgemäßen Bereiches liegen, so wirkt sich dies negativ auf die Wickelung, die Verarbeitbarkeit und auf die optischen Eigenschaften der Folie aus.

Enthält die Deckschicht (C) ein Pigment, bei dem der mittlere Durchmesser größer als 5 $\mu$m ist, so verschlechtert sich das Filterverhalten; ist der SPAN98 größer als 2, so werden die optischen Eigenschaften und die Wickelung der Folie schlechter.

Enthält die Deckschicht (C) der Folie als alleiniges Pigment eines, bei dem der mittlere Durchmesser kleiner als 2 $\mu$m ist, so erhöht sich die Trübung, und der Glanz wird schlechter; ist der SPAN98 kleiner als 1,2 sind, so wird die Wickelung der Folie schlechter, sie neigt beispielsweise zum, Verblocken'.

Die Deckschicht (C) ist zur Verbesserung des Wickelverhaltens und der Verarbeitbarkeit hoch mit inerten, zugesetzten Pigmenten gefüllt. Die Konzentration der inerten Partikel in der Deckschicht (C) liegt bevorzugt zwischen 0,12 und 0,4 Gew.-%, insbesondere zwischen 0,14 und 0,35 Gew.-% und in der besonders bevorzugten Ausführungsform zwischen 0,16 und 0,3 Gew.-% und richtet sich im Wesentlichen nach den zu erzielenden optischen Eigenschaften der Folie.

Darüber hinaus können (zusätzlich) noch andere Pigmente, z. B. mit kleinerem $d_{50}$-Wert als das Hauptpigment, in die Deckschicht (C) eingearbeitet werden. Weichen aber die $d_{50}$-Werte und/oder SPAN98-Werte des Hauptpigments von den o. g. Werten ab bzw. ist ein solches Pigment nicht vorhanden, so treten die oben beschriebenen Nachteile auf (Hauptpigment bedeutet das Pigment mit der höchsten Konzentration in (C).

Die Antifog-Beschichtung auf der Deckschicht (A) zeichnet sich dadurch aus, dass sie neben Wasser die folgenden Komponenten enthält:

Polyvinylpyrrolidon (= Komponente i),
ein Tensid (= Komponente ii) und optional
ein Polymer, das die Anbindung der anderen Komponenten an die Polyesteroberfläche verbessert (haftvermittelndes Polymer = Komponente iii)

Die Gesamtkonzentration aller Komponenten i) bis iii) in Wasser liegt bevorzugt im Bereich von 1 bis 8 Gew.-%. Sofern nichts anderes gesagt ist, handelt es sich bei allen Mengenangaben um Gewichtsprozent, bezogen auf das Gewicht der gebrauchsfertigen Beschichtungszubereitung.

Das Polyvinylpyrrolidon wird bevorzugt mit einem Molekulargewicht ($M_w$) zwischen 20 und 2500 kDalton, besonders bevorzugt zwischen 40 und 1500 kDalton, eingesetzt. Der Anteil des Polyvinylpyrrolidons in der Beschichtungslösung beträgt meist 0,3 bis 4,0 Gew.-%, bevorzugt 0,5 bis 3,5 Gew.-%. Bei Verwendung von Polyvinylpyrrolidon mit niedrigeren Molekulargewichten wird die Abwaschbeständigkeit der Beschichtung schlechter, bei höheren Molekulargewichten wird die Beschichtungslösung zu viskos.

Unter Tensiden versteht man Moleküle, die aus einem hydrophoben und einem hydrophilen Teil bestehen, man sagt sie sind amphiphil.

Das in der oben beschriebenen Beschichtungszusammensetzung genannte Tensid wird in einer Konzentration von ca. 0,1 bis 2,5 Gew.-%, bevorzugt von 0,3 bis 2,0 Gew.-%, verwendet und ist bevorzugt ein ionisches, besonders bevorzugt ein anionisches Tensid und wird besonders bevorzugt aus der Gruppe der Alkylsulfate, Alkylbenzolsulfate, Alkylethersulfate oder Sulfobernsteinsäureester oder deren Salzen gewählt.

Die Polymere, die die Anbindung des Polyvinylpyrrolidons an die Polyesteroberfläche verbessern, werden bevorzugt in Form einer wässrigen Lösung oder Dispersion eingesetzt. Die Konzentration dieser Polymere in der fertigen Beschichtungslösung beträgt ca. 0,3 bis 4,0 Gew.-%, bevorzugt 0,5 bis 3,5 Gew.-%. Geeignete Polymere dieser Art sind Acrylate wie sie beispielsweise beschrieben sind in der WO 94/13476, hydrophile Polyester (z. B. 5-Nasulfoisophthalsäurehaltiger PET/IPA-Polyester wie sie beispielsweise beschrieben sind in der EP-A-0 144 878, US-A-4,252,885 oder EP-A-0 296 620, dentritische Polyester mit Alkohol oder Säureendgruppen), Polyurethane, Butadiencopolymere mit Acrylnitril oder Methylmethacrylat, Methacrylsäure oder deren Ester.

Damit besteht die gebrauchsfertige Beschichtungszusammensetzung bevorzugt nur aus Wasser und den Komponenten i) und ii) bzw. i), ii) und iii) sowie ggf. Antiblockmitteln. "Bestehen" bedeutet hier, dass die Zusammensetzung zu mindestens 90 Gew.-%, bevorzugt mindestens 95 Gew.-% und besonders bevorzugt zu mindestens 99 Gew.-% aus den genannten Komponenten besteht.

Nach der In-line-Beschichtung mit der Beschichtungszusammensetzung besteht die fertige Beschichtung auf der Deckschicht (A) aus dem getrockneten Rückstand (Trocknungsprodukt) der Beschichtungszusammensetzung, die dann ebenso bevorzugt nur aus dem Trocknungsprodukt der Komponenten i) und ii) bzw. i), ii) und iii) sowie ggf. Antiblockmitteln besteht. Das überschüssige Wasser bzw. verwendete Lösungsmittel ist im Prozess abgedampft.

Überraschenderweise hat sich gezeigt, dass die Beschichtung neben dem Anti-Fog-Effekt eine deutliche Reduktion der Reibung der Siegelschicht (A) gegenüber sich selbst und gegenüber der Deckschicht (C) der Folie bewirkt.

Die Basisschicht (B) und die Deckschicht (C) der Folie bestehen bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbi-benzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salze polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Erfindungsgemäße Polyester sind als Handelsprodukte erhältlich.

Die bevorzugt durch Coextrusion auf die Basisschicht (B) aufgebrachte siegelfähige Deckschicht (A) besteht bevorzugt im Wesentlichen aus Copolyestern, die überwiegend aus Isophthal- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten aufgebaut sind. Der Anteil an Ethylenterephthalat beträgt bevorzugt 60 bis 95 Mol-% und der entsprechende Anteil an Ethylenisophthalat 40 bis 5 Mol-%. Bevorzugt sind weiterhin Copolyester, bei denen der Anteil an Ethylenterephthalat 65 bis 90 Mol-% und der entsprechende Anteil an Ethylenisophthalat 35 bis 10 Mol-% beträgt, und ganz bevorzugt sind Copolyester, bei denen der Anteil an Ethylenterephthalat 70 bis 85 Mol-% und der entsprechende Anteil an Ethylenisophthalat 30 bis 15 Mol-% beträgt.

Die gewünschten Siegeleigenschaften der Deckschicht (A) werden vermutlich aus der Kombination der chemischen Zusammensetzung des verwendeten Copolyesters, der Deckschichtdicke, der Topographie (glatte Oberfläche) und der hydrophilen Beschichtung erhalten.

Die siegelfähige Deckschicht (A) hat

- gegenüber sich selbst eine Siegelanspringtemperatur von bevorzugt weniger als 150 °C und eine Siegelnahtfestigkeit (die Siegelnaht wird bei 180 °C hergestellt, die Siegelnahtfestigkeit bei 23 °C bestimmt) von bevorzugt mindestens 1,0 N/15 mm Folienbreite;
- gegenüber einem Substrat aus APET eine Siegelanspringtemperatur von bevorzugt kleiner 160 °C und eine Siegelnahtfestigkeit (die Siegelnaht wird bei 180 °C hergestellt, die Siegelnahtfestigkeit bei 23° C bestimmt) von bevorzugt mindestens 1,0 N/15 mm Folienbreite.

Die besten Siegeleigenschaften der Folie erhält man, wenn dem Copolyester keine weiteren Additive, insbesondere keine anorganischen oder organischen Füllstoffe, zugegeben werden. Für diesen Fall erhält man bei vorgegebenem Copolyester und vorgegebener Schichtdicke die niedrigste Siegelanspringtemperatur und die höchste Siegelnahtfestigkeit.

Die Basisschicht (B) kann zusätzlich übliche Additive wie beispielsweise UV-Stabilisatoren, Hydrolysestabilisatoren, Antiblockmittel (z. B. über das Regenerat) enthalten. Die andere Deckschicht (C) kann ebenfalls zusätzlich übliche Additive wie beispielsweise Stabilisatoren enthalten. Diese Additive werden zweckmäßig dem Polymer bzw. der Polymermischung bereits vor dem Aufschmelzen zugesetzt. Als Stabilisatoren werden vorteilhaft beispielsweise Phosphorverbindungen wie Phosphorsäure oder Phosphorsäureester eingesetzt.

Bei der Folie ist die Dicke der Deckschicht (C) im Allgemeinen größer als 0,4 $\mu$m und liegt bevorzugt im Bereich von 0,5 bis 10 $\mu$m, insbesondere im Bereich von 0,8 bis 9 $\mu$m und besonders bevorzugt im Bereich von 1,0 bis 8 $\mu$m.

Bei der Folie ist die Dicke der Deckschicht (A) im Allgemeinen größer als 0,4 $\mu$m und liegt bevorzugt im Bereich von 0,5 bis 10 $\mu$m, insbesondere im Bereich von 0,8 bis 9 $\mu$m und besonders bevorzugt im Bereich von 1,0 bis 8 $\mu$m.

Die Gesamtdicke der erfindungsgemäßen Polyesterfolie kann innerhalb weiter Grenzen variieren. Sie beträgt bevorzugt 5 bis 500 $\mu$m, insbesondere 7 bis 300 $\mu$m, vorzugsweise 10 bis 100 $\mu$m.

Die Erfindung betrifft auch ein Verfahren zur Herstellung der erfindungsgemäßen Polyesterfolie nach dem an sich aus der Literatur bekannten Coextrusionsverfahren.

Zunächst werden wie beim Coextrusionsverfahren üblich das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer unorientierten Vorfolie verfestigt.

Die biaxiale Verstreckung wird im Allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3,0:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Bevorzugt wird nach der biaxialen Streckung die nicht siegelfähige Oberfläche der Folie nach einer der bekannten Methoden corona- oder flammbehandelt. Die Behandlungsintensität liegt im Allgemeinen im Bereich von über 50 mN/m.

Die erfindungsgemäße biaxial orientierte Polyesterfolie wird in-line auf der siegelfähigen Schicht beschichtet, d. h. die Beschichtung wird bevorzugt während des Folienherstellprozesses vor der Längs- und/oder vor der Querstreckung aufgebracht. Um eine gute Benetzung der Polyesterfolie mit der wässrigen Beschichtungslösung oder -dispersion zu erreichen, wird die Oberfläche bevorzugt zunächst coronabehandelt. Die Beschichtung kann mit einem gängigen geeigneten Verfahren wie mit einem Schlitzgießer oder einem Sprühverfahren aufgetragen werden.

Besonders bevorzugt ist die Aufbringung der Beschichtung mittels des "Reverse gravure-roll coating"-Verfahrens, bei dem sich die Beschichtung äußerst homogen mit Antragsgewichten zwischen 1 und 5 g/m$^2$ auftragen lässt (Nassantrag). Ebenfalls bevorzugt ist die Auftragung durch das Meyer-Rod-Verfahren, mit dem sich größere Beschichtungsstärken erzielen lassen. Die Beschichtung auf der fertigen Folie weist eine Dicke von ca. 5 bis 500 nm, bevorzugt 30 bis 200 nm, auf.

Die erfindungsgemäße Folie zeichnet sich durch eine hervorragende Siegelfähigkeit, eine sehr gute Wickelung und Optik, ein sehr gutes Verarbeitungsverhalten und durch einen sehr guten Anti-Fog-Effekt aus. Die siegelfähige Deckschicht (A) siegelt gegen sich selbst, gegen die nicht siegelfähige Deckschicht (C) und gegen Substrate aus z. B. APET, A/CPET und CPET. Die Folie ist damit in vielen Bereichen einsetzbar wie z. B. als Deckelfolie für (Menü)-Schalen oder für Beutel oder allgemein als Verpackungsmaterial für Nahrungs- und Genussmittel.

Daneben ist bei der Herstellung der Folie gewährleistet, dass das Verschnittmaterial (Regenerat) in einer Menge im Bereich von ca. 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden, insbesondere nicht ihr optisches Erscheinungsbild.

Die nachstehenden Tabellen (Tabellen 1 und 2) fassen die wichtigsten bevorzugten Folieneigenschaften noch einmal zusammen.

**Tabelle 1** (Antifog-Beschichtung, Zeilen 1-4 bezogen auf die gebrauchsfertige - wässrige - Beschichtungszusammensetzung; Zeilen 5 -6 bezogen auf getrocknete Beschichtung auf Deckschicht (A))

| Beschichtungskomponenten | Bevorzugter Bereich | besonders bevorzugt | Einheit |
|---|---|---|---|
| Polyvinylpyrrolidon, Anteil | 0,3 bis 4,0 | 0,5 bis 3,5 | Gew.-% |
| Polyvinylpyrrolidon, $M_w$ | 20 bis 2500 | 40 bis 1500 | kDalton |
| Tensid, Anteil | 0,1 bis 2,5 | 0,3 bis 2,0 | Gew.-% |
| optionales Polymer, Anteil | 0,3 bis 4,0 | 0,5 bis 3,5 | Gew.-% |
| Dicke der Beschichtung | 5 bis 500 | 30 bis 200 | nm |
| Kontaktwinkel $\alpha$ gegen Wasser | < 20 | < 15 | °C |

**Tabelle 2**

| Deckschicht (A) | Bevorzugter Bereich | besonders bevorzugt | ganz besonders bevorzugt | Einheit |
|---|---|---|---|---|
| Füllstoffkonzentration | ≤ 0,01 | keine | | Gew.-% |
| Dicke der Deckschicht (A) | 0,5 bis 10 | 0,8 bis 9 | 1,0 bis 8 | $\mu$m |
| **Deckschicht (C)** | | | | |
| Füllstoffkonzentration | 0,12 bis 0,40 | 0,14 bis 0,35 | 0,16 bis 0,30 | Gew.-% |
| Partikeldurchmesser $d_{50}$ | 2 bis 5 | 2,1 bis 4,9 | 2,2 bis 4,8 | $\mu$m |
| SPAN98 | 1,2 bis 2 | 1,25 bis 1,9 | 1,3 bis 1,8 | |
| Dicke der Deckschicht (C) | 0,5 bis 10 | 0,8 bis 9 | 1,0 bis 8 | $\mu$m |
| **Eigenschaften der Folie** | | | | |
| Dicke der Folie | 5 bis 500 | 7 bis 300 | 10 bis 100 | $\mu$m |
| Mindestsiegeltemperatur der DS A gegenüber sich selbst (= FIN) | 150 | 145 | 140 | °C |
| Siegelnahtfestigkeit von DS A gegenüber sich selbst (Siegeltemperatur 180 °C) | > 1,0 | > 1,2 | > 1,4 | N/15 mm |

(fortgesetzt)

| Eigenschaften der Folie | | | | |
|---|---|---|---|---|
| Mindestsiegeltemperatur der DS A gegen A-PET-Substrat | 160 | 155 | 150 | °C |
| Siegelnahtfestigkeit von DS A gegen A-PET-Substrat (Siegeltemperatur 180 °C) | > 1,0 | > 1,2 | > 1,4 | N/15 mm |
| Trübung der Folie | < 5 | < 4,5 | < 4 | % |
| DS: Deckschicht | | | | |

Zur Charakterisierung der Rohstoffe und der Folien wurden im Rahmen der vorliegenden Erfindung die folgenden Messmethoden benutzt:

Messung des Kontaktwinkels $\alpha$

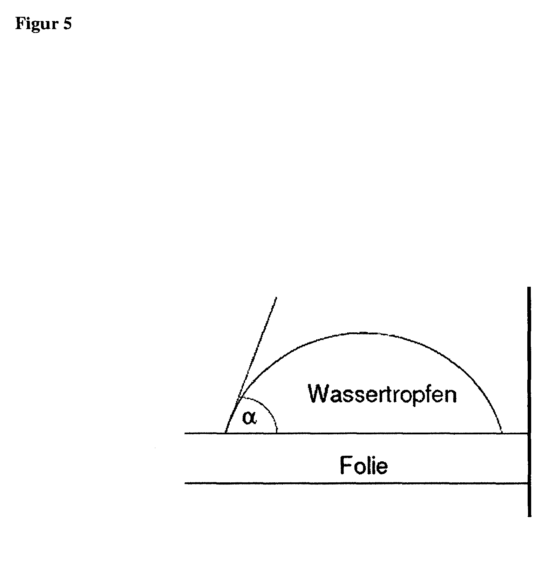

Der Kontaktwinkel $\alpha$ gegenüber Wasser (siehe Figur 5) wurde gemessen und als Maß für die Hydrophilie der Folienoberfläche benutzt. Je kleiner der Kontaktwinkel $\alpha$ ist, desto größer ist die Hydrophilie der Folienoberfläche. Die Messung wurde durchgeführt an einem Goniometer G1 der Firma Krüss, Hamburg, DE.

Bestimmung der Antibeschlag-Wirkung

Die Antibeschlag-Eigenschaften der Polyesterfolien wurden wie folgt bestimmt:

In einem auf 23 °C und 50 % relative Luftfeuchtigkeit temperierten Labor wurden Folienmuster auf eine Menüschale (Länge ca. 17 cm, Breite ca. 12 cm, Höhe ca. 3 cm) aus amorphem Polyethylenterephthalat (= APET), die ca. 50 ml Wasser enthielt, gesiegelt.

Die Schalen wurden in einem auf 4 °C temperierten Kühlschrank gelagert und nach jeweils 10 min, 30 min, 4 h, 8 h und 24 h zur Beurteilung entnommen. Die Kondensatbildung beim Abkühlen der 23 °C warmen Luft auf Kühlschranktemperatur wurde geprüft. Eine mit einem wirksamen Antibeschlag-Mittel ausgerüstete Folie ist auch nach der Kondensatbildung transparent, da das Kondensat beispielsweise einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.

Eine weitere Untersuchungsmethode ist der so genannte Heiß-Dampf- oder Hot-Fog-Test. Dazu wird ein 250 ml Becherglas, das 50 ml Wasser enthält und mit der zu prüfenden Folie bespannt ist, in ein auf 70 °C temperiertes Wasserbad gestellt. Die Beurteilung ist die gleiche wie oben beschrieben. Zusätzlich kann man mit diesem Test die Langzeit-Antibeschlag-Wirkung bzw. die Abwaschbeständigkeit der Folie prüfen, da der Dampf ständig an der Folie kondensiert und wieder abläuft oder abtropft. Leichtlösliche Substanzen werden so abgewaschen, und die Antibeschlag-Wirkung lässt nach. Diese Untersuchung wurde ebenfalls in einem auf 23 °C und 50 % relative Luftfeuchtigkeit temperierten Labor durchgeführt.

Messung des mittleren Partikeldurchmessers $d_{50}$

Die Bestimmung des mittleren Partikeldurchmessers $d_{50}$ wurde mittels Laser auf einem Master Sizer (Malvem Instruments, GB) nach der Standardmethode durchgeführt (andere Messgeräte sind z. B. Horiba LA 500 (Horiba Ltd., JP) oder Helos (Sympatec GmbH, DE), welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 Gew.-%-Ordinatenwertes mit der Summenkurve liefert auf der Abszissenachse den gewünschten $d_{50}$-Wert (vgl. Figur 2).

Messung des SPAN98

Die Bestimmung des SPAN98 wurde mit dem gleichen Messgerät durchgeführt wie bei der Bestimmung des

mittleren Durchmessers $d_{50}$ beschrieben. Der SPAN98 ist dabei wie folgt definiert:

$$SPAN\,98 = \frac{d_{98} - d_{10}}{d_{50}}.$$

Für die Ermittlung von $d_{98}$ und $d_{10}$ wird wiederum die Summenkurve der Partikelgrößenverteilung zu Grunde gelegt. Der Schnittpunkt des 98 %-Ordinatenwertes mit der Summenkurve liefert auf der Abszissenachse den gewünschten $d_{98}$-Wert, und der Schnittpunkt des 10 %-Ordinatenwertes mit der Summenkurve liefert auf der Abszissenachse den gewünschten $d_{10}$-Wert (vgl. Figur 3).

Siegelnahtfestigkeit (gegenüber APET)

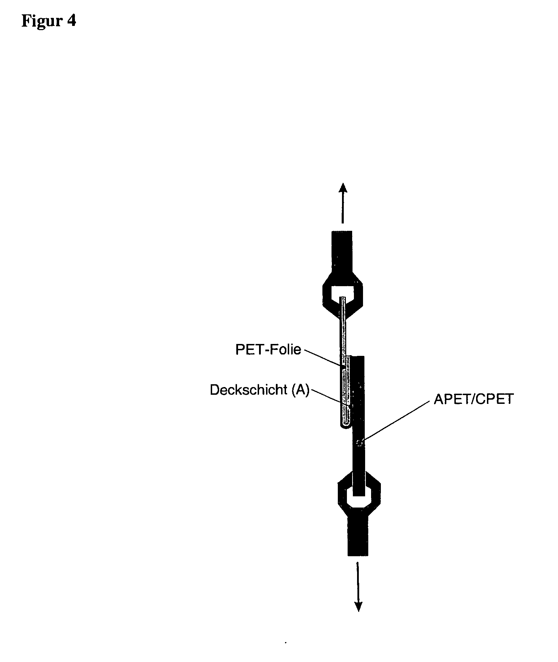

Zur Bestimmung der Siegelnahtfestigkeit wird ein Folienstreifen (100 mm lang x 15 mm breit) auf die APET-Seite eines entsprechenden Streifens einer Menüschale gelegt und bei der eingestellten Temperatur von 180 °C, einer Siegelzeit von 0,5 s und einem Siegeldruck von ca. 3 bar (Siegelgerät HSG/ET der Firma Brugger, DE, beidseitig beheizte Siegelbacke) gesiegelt. Entsprechend Figur 4 werden die gesiegelten Streifen in die Zugprüfmaschine (z. B. Universalprüfmaschine TC-FR1.0TH.D09 der Firma Zwick, DE) eingespannt und die 180°-Siegelnahtfestigkeit, d. h. die zur Auftrennung der Prüfstreifen benötigte Kraft, mit einer Abzugsgeschwindigkeit von 200 mm/min und einer Prüftemperatur von 23 °C bestimmt. Die Siegelnahtfestigkeit wird in N pro 15 mm Folienstreifen angegeben (z. B. 2 N/15 mm).

Bestimmung der Mindestsiegeltemperatur (gegenüber APET)

Mit dem Siegelgerät HSG/ET der Firma Brugger werden, wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Die Siegelnahtfestigkeit wurde wie bei der Bestimmung der 180 °C-Siegelnahtfestigkeit gemessen. Die Mindestsiegeltemperatur ist die Temperatur, bei der eine Siegelnahtfestigkeit von mindestens 0,5 N/15 mm erreicht wird (= Siegelanspringtemperatur).

Siegelnahtfestigkeit gegenüber sich selbst (= FIN-Siegelung)

Zur Bestimmung der Siegelnahtfestigkeit wurden zwei 15 mm breite Folienstreifen übereinandergelegt und bei 180 °C, einer Siegelzeit von 0,5 s und einem Siegeldruck von 3 bar (Gerät: Brugger Typ NDS, einseitig beheizte Siegelbacke) versiegelt. Die Siegelnahtfestigkeit wurde nach der T-Peel-Methode bestimmt = 2.90°.

Bestimmung der Mindestsiegeltemperatur gegenüber sich selbst

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

Trübung

Die Trübung wird nach ASTM D 1003 - 52 bestimmt.

SV-Wert (Standard Viscosity)

Die Standardviskosität SV (DCE) wird, angelehnt an DIN 53726, bei 25 °C in Dichloressigsäure gemessen. Die intrinsische Viskosität (IV, gemessen in dl/g) von Polyethylenterephthalat berechnet sich wie folgt aus der Standardviskosität

$$IV = [\eta] = 6{,}907 \cdot 10^{-4}\ SV\ (DCE) + 0{,}063096\ [dl/g]$$

Beispiel 1

Zur Herstellung der Beschichtungslösung wurden folgende Komponenten in Wasser gelöst:

- 1,5 Gew.-% Polyvinylpyrrolidon (®Luvitec K30; BASF AG, $M_w$ ~50 kDalton)
- 1,5 Gew.-% Diethylhexylsulfosuccinat-Natriumsalz (®Lutensit A-BO; BASF AG) (die Gew.-%-Angaben beziehen sich auf die fertige Beschichtungslösung).

Diese Beschichtungslösung wurde nach dem folgenden Verfahren auf die coextrudierte Polyesterfolie aufgebracht:

Es wurde eine mehrschichtige Polyesterschmelze hergestellt und diese durch eine Breitschlitzdüse auf eine auf etwa 20 °C gehaltene Gießwalze extrudiert, wo sie zu einer unorientierten Folie erstarrte.

Die coextrudierte Polyesterfolie enthielt folgende Schichten und Rohstoffe:

| | |
|---|---|
| Deckschicht (A) | 100 Gew.-% Copolyester aus 78 Mol-% Ethylenterephthalat und 22 Mol-% Ethylenisophthalat mit einem SV-Wert von 800 |
| Basisschicht (B) | 100 Gew.-% Polyethylenterephthalat mit einem SV-Wert von 800 |
| Deckschicht (C) | Mischung aus 80 Gew.-% Polyethylenterephthalat mit einem SV-Wert von 800 und 20 Gew.-% Masterbatch aus 99 Gew.-% Polyethylenterephthalat (SV-Wert von 800) und 1,0 Gew.-% Sylobloc® 44 H (synthetisches $SiO_2$ der Fa. Grace, $d_{50}$: 2,5 μm, SPAN98: 1,8) |

Die unorientierte Folie wurde im Streckverhältnis von 3,8:1 längsgestreckt, wobei sie auf einer Temperatur von 115 °C gehalten wurde. Die längsgestreckte Folie wurde auf der Deckschicht (A) durch Reversgravurbeschichtung mit der oben beschriebenen Lösung aus Polyvinylpyrrolidon und Diethylhexylsulfosuccinat-Natriumsalz beschichtet. Die längsgestreckte, beschichtete Folie wurde bei einer Temperatur von 100 °C getrocknet. Danach wurde die Folie im Streckverhältnis 3,8:1 quergestreckt, so dass man eine biaxial gestreckte Folie erhielt. Die biaxial gestreckte Folie wurde bei 230 °C thermofixiert. Die Endfoliendicke war 25 μm, wobei die Deckschichten jeweils 2 μm dick waren. Das Trockengewicht der Beschichtung betrug ca. 0,04 g/m².

Die Folie zeigte sehr gute Antibeschlag-Eigenschaften, d. h. die Bildung feiner Tröpfchen wurde nicht beobachtet. Der gemessene Kontaktwinkel betrug α = 12° im Vergleich zu einer unbeschichteten Folie mit einem Winkel von α = 64°. Die Transparenz und die Trübung der Folie blieben beim Antibeschlag-Test unverändert.

Beispiel 2

Im Vergleich zu Beispiel 1 wurde die Deckschichtdicke der siegelfähigen Schicht (A) von 2,0 auf 3,0 μm bei sonst identischem Folienaufbau und identischer Herstellungsweise angehoben. Die Siegeleigenschaften haben sich hierdurch verbessert, insbesondere ist die Siegelnahtfestigkeit deutlich größer geworden. Wie Beispiel 1 zeigte auch diese Folie sehr gute Antibeschlag-Eigenschaften.

**Beispiel 3**

Im Vergleich zu Beispiel 1 wurde jetzt folgende Zusammensetzung der Beschichtungslösung verwendet:

- 1,0 Gew.-% Polyvinylpyrrolidon (Luvitec K30; BASF AG, $M_w$ -50 kDalton)
- 1,0 Gew.-% Acrylat-Copolymer bestehend aus 60 Gew.-% Methylmethacrylat, 35 Gew.-% Ethylacrylat und 5 Gew.-% N-Methylolacrylamid
- 2,0 Gew.-% Diethylhexylsulfosuccinat-Natriumsalz (Lutensit A-BO BASF AG).

Das Trockengewicht der Beschichtung betrug ca. 0,05 g/m².
Wie Beispiel 1 zeigte auch diese Folie sehr gute Antibeschlag-Eigenschaften, gleichzeitig war die Abwaschbeständigkeit der Beschichtung verbessert, d. h. die Antibeschlag-Eigenschaften blieben auch nach mehreren Stunden Behandlung mit Dampf noch erhalten. Der gemessene Kontaktwinkel betrug α = 11° im Vergleich zu einer unbeschichteten Folie mit einem Winkel von $\alpha$ = 64°. Die Transparenz und die Trübung der Folie blieben beim Antibeschlag-Test unverändert.

**Vergleichsbeispiel 1**

Im Vergleich zu Beispiel 1 wurde jetzt die siegelfähige Deckschicht (A) so hoch pigmentiert wie die nicht siegelfähige Deckschicht (C). Die Wickelung und die Verarbeitungseigenschaften der Folie haben sich durch diese Maßnahme marginal verbessert, jedoch sind die Siegeleigenschaften und die Optik der Folie deutlich schlechter geworden.

**Vergleichsbeispiel 2**

Analog Beispiel 1 wurde eine biaxial orientierte Polyesterfolie hergestellt, allerdings ohne Beschichtung. Durch das Weglassen der Beschichtung ist die Reibung der Folie angestiegen.
Beim Antibeschlag-Test zeigte die Folie starke Tröpfchenbildung, d. h. die Folie hatte keinen Antibeschlag-Effekt.
Die wichtigsten Eigenschaften der so hergestellten Folien sind in der nachfolgenden Tabelle 3 zusammengefasst:

**Tabelle 3**

| | | Beispiel 1 | Beispiel 2 | Beispiel 3 | Vergleichsbeispiel 1 | Vergleichsbeispiel 2 |
|---|---|---|---|---|---|---|
| Dicke der Deckschicht (A) (μm) | | 2 | 3 | 2 | 2 | 2 |
| Beschichtungskomponenten | PVP (%) | 1,5 | 1,5 | 1,0 | 1,5 | - |
| | Tensid (%) | 1,5 | 1,5 | 1,0 | 1,5 | - |
| | Acrylat (%) | - | - | 2,0 | - | - |
| Trockengewicht der Beschichtung (g/m$^2$) | | 0,04 | 0,04 | 0,05 | 0,04 | - |
| Mindestsiegeltemperatur gegenüber A-PET (°C) | | 149 | 146 | 147 | 165 | 139 |
| Siegelnahtfestigkeit gegenüber A-PET bei 180 °C (N/15 mm) | | 3,8 | 4,5 | 4,0 | 1,0 | 5,3 |
| Trübung | | 1,9 | 1,8 | 2,0 | 5,5 | 1,9 |
| Verarbeitungsverhalten | | sehr gut | sehr gut | sehr gut | sehr gut | schlecht |
| Kontaktwinkel α gegenüber Wasser | | 12 | 12 | 11 | 11 | 64 |

**Patentansprüche**

1. Polyesterfolie, welche eine Basisschicht (B), eine Deckschicht (C) und eine siegelfähige Deckschicht (A) mit Antifog-Beschichtung aufweist, wobei

   a) die siegelfähige Deckschicht (A) weniger als 0,01 Gew.-% externe Partikel enthält und
   b) die Deckschicht (C) 0,12 bis 0,4 Gew.-% externe Partikel enthält, die einen mittleren Durchmesser $d_{50}$ von 2 bis 5 $\mu$m und eine Partikelgrößenverteilung (SPAN98) von 1,2 bis 2 aufweisen.

2. Polyesterfolie nach Anspruch 1, **dadurch gekennzeichnet, dass** die Folie einen (A)-(B)-(C) Schichtaufbau hat und die Deckschicht (A) mit einer Antifog-Beschichtung versehen ist.

3. Polyesterfolie nach Anspruch 1 oder 2, **dadurch gekennzeichnet, dass** die Deckschicht (A) keine externen Partikel enthält.

4. Polyesterfolie nach einem oder mehreren der Ansprüche 1 bis 3, **dadurch gekennzeichnet, dass** die Basisschicht (B) einen thermoplastischen Polyester enthält.

5. Polyesterfolie nach einem oder mehreren der Ansprüche 1 bis 4, **dadurch gekennzeichnet, dass** der Polyester der Basisschicht (B) mindestens 90 Mol-% Ethylenglykol- und Terephthalsäure-Einheiten oder Ethylenglykol- und Naphthalin-2,6-dicarbonsäure-Einheiten aufweist.

6. Polyesterfolie nach einem oder mehreren der Ansprüche 1 bis 5, **dadurch gekennzeichnet, dass** der Polyester der Basisschicht (B) Polyethylenterephthalat ist.

7. Polyesterfolie nach einem oder mehreren der Ansprüche 1 bis 6, **dadurch gekennzeichnet, dass** die siegelfähige Deckschicht (A) einen Copolyester enthält, der Ethylenterephthalat-und Ethylenisophthalat-Einheiten aufweist.

8. Polyesterfolie nach einem oder mehreren der Ansprüche 1 bis 7, **dadurch gekennzeichnet, dass** der Copolyester der siegelfähigen Deckschicht (A) 60 bis 95 Mol-% Ethylenterephthalat- und 40 bis 5 Mol-% Ethylenisophthalat-Einheiten aufweist.

9. Polyesterfolie nach einem oder mehreren der Ansprüche 1 bis 8, **dadurch gekennzeichnet, dass** die Deckschicht (C) $SiO_2$ als externe Partikel enthält.

10. Polyesterfolie nach einem oder mehreren der Ansprüche 1 bis 9, **dadurch gekennzeichnet, dass** die Antifog-Beschichtung auf der Deckschicht (A) das Trocknungsprodukt einer Beschichtungszusammensetzung ist, die Wasser, Polyvinylpyrrolidon, ein Tensid und optional ein haftvermittelndes Polymer enthält.

11. Polyesterfolie nach einem oder mehreren der Ansprüche 1 bis 10, **dadurch gekennzeichnet, dass** das Tensid der Beschichtungszusammensetzung ein Sulfobernsteinsäureester oder dessen Salz und das haftvermittelnde Polymer ein Acrylat ist.

12. Polyesterfolie nach einem oder mehreren der Ansprüche 1 bis 11, **dadurch gekennzeichnet, dass** die Folie eine Trübung von kleiner als 5 % aufweist.

13. Polyesterfolie nach einem oder mehreren der Ansprüche 1 bis 12, **dadurch gekennzeichnet, dass** die Deckschicht (A) eine Mindestsiegeltemperatur gegenüber einem APET-Substrat von kleiner als 160 °C aufweist.

14. Polyesterfolie nach einem oder mehreren der Ansprüche 1 bis 13, **dadurch gekennzeichnet, dass** die Deckschicht (A) bei einer Siegeltemperatur von 180 °C eine Siegelnahtfestigkeit gegenüber einem APET-Substrat von größer als 1 N/15 mm aufweist.

15. Polyesterfolie nach einem oder mehreren der Ansprüche 1 bis 14, **dadurch gekennzeichnet, dass** die beschichtete Deckschicht (A) einen Kontaktwinkel gegen Wasser von weniger als 20° aufweist.

16. Polyesterfolie nach einem oder mehreren der Ansprüche 1 bis 15, **dadurch gekennzeichnet, dass** die Deckschicht (A) eine Dicke von 0,5 bis 10 $\mu$m aufweist.

**17.** Verfahren zur Herstellung einer Polyesterfolie nach einem oder mehreren der Ansprüche 1 bis 16 umfassend die Schritte

a) Herstellen einer mehrschichtigen Folie durch Coextrusion,
b) Strecken der Folie in Längs- und Querrichtung,
c) Thermofixieren der gestreckten Folie und
d) Beschichten der Folie mit einer Antifog-Beschichtung vor der Längs- oder nach der Längs- und vor der Querstreckung.

**18.** Verwendung einer Polyesterfolie nach einem oder mehreren der Ansprüche 1 bis 16 als Verpackungsmaterial für Nahrungs- und Genussmittel.

**19.** Verwendung einer Polyesterfolie nach Anspruch 18 als Deckelfolie für Lebensmittelbehältnisse.

**Figur 1**

**Figur 2**

**Figur 3**

**Figur 4**

PET-Folie

Deckschicht (A)

APET/CPET

**Figur 5**

Wassertropfen

α

Folie

**Europäisches Patentamt**

## EUROPÄISCHER RECHERCHENBERICHT

Nummer der Anmeldung

EP 07 01 0207

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 410 905 A1 (MITSUBISHI POLYESTER FILM GMBH [DE]) 21. April 2004 (2004-04-21) * Ansprüche 1,7,8 * ----- | 1-18 | INV. B32B27/36 |
| Y | WO 2004/106059 A (CRYOVAC INC [US]; SCHWARK DWIGHT W [US]; SPEER DREW [US]) 9. Dezember 2004 (2004-12-09) * Ansprüche 1,5 * ----- | 1-18 | |

RECHERCHIERTE SACHGEBIETE (IPC)

B32B

Der vorliegende Recherchenbericht wurde für alle Patentansprüche erstellt

| Recherchenort | Abschlußdatum der Recherche | Prüfer |
|---|---|---|
| Den Haag | 18. Oktober 2007 | Hillebrand, Gerhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 07 01 0207

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2007

| Im Recherchenbericht angeführtes Patentdokument | Datum der Veröffentlichung | Mitglied(er) der Patentfamilie | Datum der Veröffentlichung |
|---|---|---|---|
| EP 1410905 A1 | 21-04-2004 | DE 10247894 A1<br>JP 2004130813 A<br>KR 20040034415 A<br>US 2004076818 A1 | 22-04-2004<br>30-04-2004<br>28-04-2004<br>22-04-2004 |
| WO 2004106059 A | 09-12-2004 | AU 2004242597 A1<br>CA 2526704 A1<br>EP 1628826 A2<br>JP 2007501146 T<br>MX PA05012586 A<br>US 2004234797 A1 | 09-12-2004<br>09-12-2004<br>01-03-2006<br>25-01-2007<br>24-02-2006<br>25-11-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1465973 A
- EP 0035835 A
- EP 0515096 A
- EP 0920381 B1
- EP 1138480 A
- EP 1471096 A
- EP 1471097 A
- EP 1475228 A
- EP 1475229 A
- EP 1471094 A
- EP 1471098 A
- US 4467073 A
- US 5262475 A
- WO 9413476 A
- EP 0144878 A
- US 4252885 A
- EP 0296620 A